(19)

**Europäisches Patentamt**

**European Patent Office**

**Office européen des brevets**

(11) **EP 4 668 131 A1**

(12) **EUROPEAN PATENT APPLICATION**

(43) Date of publication:
24.12.2025  Bulletin 2025/52

(21) Application number: 25182588.1

(22) Date of filing: 13.06.2025

(51) International Patent Classification (IPC):
**G06F 16/334** (2025.01)  **G06F 40/30** (2020.01)

(52) Cooperative Patent Classification (CPC):
**G06F 16/3347; G06F 40/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 17.06.2024  IN 202421046440

(71) Applicant: **Tata Consultancy Services Limited**
**Maharashtra (IN)**

(72) Inventors:
• **MOHITE, JAYANTRAO**
**400601 Thane (west) (IN)**

• **SINGH, DINESHKUMAR JANG BAHADUR**
**400601 Thane (west) (IN)**
• **RAJPOOT, NANDAN SINGH**
**453112 Indore (IN)**
• **MITTAL, AJAY**
**411028 Pune (IN)**
• **HAMSA, SALIM**
**682042 Kochi (IN)**
• **PATEL, ASHITA ATULKUMAR**
**382007 Gandhinagar (IN)**
• **PAPPULA, SRINIVASU**
**500034 Hyderabad (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR DYNAMIC WEIGHTED METRICS-BASED EVALUATION AND TOKENIZATION OF LARGE LANGUAGE MODELS**

(57) The embodiments of the present disclosure herein address unresolved problems of evaluation of LLM response quality and overall LLM models. Existing approaches for LLM evaluation and LLM response evaluation can be broadly categorized into automatic evaluation metrics, human evaluation, and adversarial testing. Embodiments herein provides a method and system for dynamically weighted selection of performance metrics for generation of LLM response score. Further, the system is configured method and system for generation of LLM maturity gap analysis and associated recommendation for improvement of LLM response score. Finally, the system generates a compliance certificate for every model (version) with a (threshold) level score and generates an NFT using a smart contract based blockchain, using metadata associated with the model and the evaluation metrics and results.

FIG. 2

EP 4 668 131 A1

**Description**

CROSS-REFERENCE TO RELATED APPLICATIONS AND PRIORITY

The present application claims priority to Indian application no. 202421046440, filed on 17 June 2024.

TECHNICAL FIELD

The disclosure herein generally relates to the field of Large Language Model (LLM) evaluation, and more particularly, a method and system for a dynamic weighted metrics-based evaluation and tokenization of LLMs.

BACKGROUND

Language Models (LLMs) generate responses by utilizing large-scale neural network architectures trained on vast amounts of text data. These models, such as OpenAI's Generative Pre-trained Transformer (GPT) series or Google's Bidirectional Encoder Representations from Transformers (BERT), employ techniques like self-attention mechanisms and transformer architectures to understand and generate human-like text responses. However, despite their impressive capabilities, LLMs face several challenges and issues in generating responses:

I. **Lack of Contextual Understanding:** LLMs may struggle to grasp the contextual nuances of a given prompt or query, leading to responses that are irrelevant or semantically inconsistent.
II. **Bias and Fairness:** LLMs may exhibit biases present in their training data, leading to biased or unfair responses.
III. **Robustness and Adversarial Attacks:** LLMs are vulnerable to adversarial attacks, where slight modifications to the input can result in drastically different or undesirable outputs. This vulnerability raises concerns about the robustness and reliability of LLM-generated responses.

Given these challenges, there is a pressing need for robust validation of LLM responses and models. LLM response validation involves assessing the quality, relevance, and ethical implications of generated text. Validation ensures that LLMs produce accurate, coherent, and unbiased responses that align with user expectations and ethical standards. LLM model validation encompasses evaluating the overall performance, generalization capabilities, and adherence to ethical guidelines of the underlying models. Model validation helps identify weaknesses, biases, or vulnerabilities in LLMs and guides improvements to enhance their reliability, fairness, and trustworthiness.

SUMMARY

Embodiments of the present disclosure present technological improvements as solutions to one or more of the above-mentioned technical problems recognized by the inventors in conventional systems. For example, in one embodiment, a method for a dynamic weighted metrics-based evaluation and tokenization of Large Language Models (LLMs) is provided. The processor-implemented method includes receiving, via an Input/Output (I/O) interface, at least one task, metadata associated with a large language model (LLM), an input prompt given by a user and an output associated to the input prompt from the LLM, determining a plurality of task contexts corresponding to the output obtained from the LLM using a contextual task analysis module. The plurality of task contexts is determined based on information available in the at least one task and a predefined domain knowledge base.

Further, the processor-implemented method includes fetching a set of evaluation metrics associated with the determined plurality of task contexts from a predefined task-metrics knowledge graph database and training a machine learning (ML) model based on the received at least one task, the determined plurality of task contexts and the fetched set of evaluation metrics to estimate a weight for each of the fetched set of evaluation metrics. Furthermore, the processor-implemented method includes selecting dynamically one or more evaluation metrics among the fetched set of evaluation metrics based on the plurality of task contexts and one or more user preferences obtained from the received input prompt using a predefined ensemble technique and a sematic analysis for the plurality of task contexts and assigning the estimated weight to each of the one or more dynamically selected evaluation metric using the trained ML model.

Further, the processor-implemented method includes aggregating results of the one or more dynamically selected evaluation metric based on the assigned weights using a context performance evaluation model (CPEM), calculating an LLM response quality score for each of the plurality of task contexts by computing the selected one or more evaluation metrics and the aggregated results of the one or more dynamically selected evaluation metric, and identifying a maturity gap for each of the plurality of task contexts by comparing the calculated LLM response quality score with a predefined expected response score to detect one or more issues in the output obtained from the LLM using a data quality analysis, a contextual analysis and question analysis technique.

Furthermore, the processor-implemented method includes performing a root cause analysis using a decision tree-based technique to identify root cause of the identified maturity gap for each of the plurality of task contexts and the detected one or more issues in the output obtained from the LLM, assessing a potential impact of the identified maturity gap for each of the plurality of task contexts and detected one or more issues in the output obtained from the LLM to address potential impact of the detected issues and maturity gap and recursively monitoring the identified maturity gap for each of the plurality of task contexts and the detected one or more issues in the output obtained from the LLM to recommend improvement of the LLM response quality score.

In another embodiment, a system for dynamic weighted metrics-based evaluation and tokenization of Large Language Models (LLMs) is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive at least one task, metadata associated with a large language model (LLM), an input prompt given by a user and an output associated to the input prompt from the LLM and determine a plurality of task contexts corresponding to the output obtained from the LLM using a contextual task analysis module, wherein the plurality of task contexts is determined based on information available in the at least one task and a predefined domain knowledge base. The one or more hardware processors are configured by the instructions to fetch a set of evaluation metrics associated with the determined plurality of task contexts from a predefined task-metrics knowledge graph database and train a machine learning (ML) model based on the received at least one task, the determined plurality of task contexts and the fetched set of evaluation metrics to estimate a weight for each of the fetched set of evaluation metrics.

Further, the one or more hardware processors are configured by the instructions to select dynamically one or more evaluation metrics among the fetched set of evaluation metrics based on the plurality of task contexts and one or more user preferences obtained from the received input prompt using a predefined ensemble technique and a sematic analysis for the plurality of task contexts and assign the estimated weight to each of the one or more dynamically selected evaluation metric using the trained ML model.

Furthermore, the one or more hardware processors are configured by the instructions to aggregate results of the one or more dynamically selected evaluation metric based on the assigned weights using a context performance evaluation model (CPEM), calculate an LLM response quality score for each of the plurality of task contexts by computing the selected one or more evaluation metrics and the aggregated results of the one or more dynamically selected evaluation metric, and identify a maturity gap for each of the plurality of task contexts by comparing the calculated LLM response quality score with a predefined expected response score to detect one or more issues in the output obtained from the LLM using a data quality analysis, a contextual analysis and question analysis technique.

Finally, the one or more hardware processors are configured by the instructions to perform a root cause analysis using a decision tree-based technique to identify root cause of the identified maturity gap for each of the plurality of task contexts and the detected one or more issues in the output obtained from the LLM, assess a potential impact of the identified maturity gap for each of the plurality of task contexts and detected one or more issues in the output obtained from the LLM to address potential impact of the detected issues and maturity gap and recursively monitoring the identified maturity gap for each of the plurality of task contexts and the detected one or more issues in the output obtained from the LLM to recommend improvement of the LLM response quality score.

In yet another aspect, there are provided one or more non-transitory machine-readable information storage mediums comprising one or more instructions, which when executed by one or more hardware processors causes a method for a dynamic weighted metrics-based evaluation and tokenization of Large Language Models (LLMs) is provided. The processor-implemented method includes receiving, via an Input/Output (I/O) interface, at least one task, metadata associated with a large language model (LLM), an input prompt given by a user and an output associated to the input prompt from the LLM, determining a plurality of task contexts corresponding to the output obtained from the LLM using a contextual task analysis module, wherein the plurality of task contexts is determined based on information available in the at least one task and a predefined domain knowledge base.

Further, the processor-implemented method includes fetching a set of evaluation metrics associated with the determined plurality of task contexts from a predefined task-metrics knowledge graph database and training a machine learning (ML) model based on the received at least one task, the determined plurality of task contexts and the fetched set of evaluation metrics to estimate a weight for each of the fetched set of evaluation metrics. Furthermore, the processor-implemented method includes selecting dynamically one or more evaluation metrics among the fetched set of evaluation metrics based on the plurality of task contexts and one or more user preferences obtained from the received input prompt using a predefined ensemble technique and a sematic analysis for the plurality of task contexts and assigning the estimated weight to each of the one or more dynamically selected evaluation metric using the trained ML model.

Further, the processor-implemented method includes aggregating results of the one or more dynamically selected evaluation metric based on the assigned weights using a context performance evaluation model (CPEM), calculating an LLM response quality score for each of the plurality of task contexts by computing the selected one or more evaluation metrics and the aggregated results of the one or more dynamically selected evaluation metric, and identifying a maturity gap for each of the plurality of task contexts by comparing the calculated LLM response quality score with a predefined expected response score to detect one or more issues in the output obtained from the LLM using a data quality analysis, a contextual analysis and question analysis technique.

Furthermore, the processor-implemented method includes performing a root cause analysis using a decision tree-based technique to identify root cause of the identified maturity gap for each of the plurality of task contexts and the detected one or more issues in the output obtained from the LLM, assessing a potential impact of the identified maturity gap for each of the plurality of task contexts and detected one or more issues in the output obtained from the LLM to address potential impact of the detected issues and maturity gap and recursively monitoring the identified maturity gap for each of the plurality of task contexts and the detected one or more issues in the output obtained from the LLM to recommend improvement of the LLM response quality score.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for dynamic weighted metrics-based evaluation and tokenization of Large Language Models (LLMs), according to some embodiments of the present disclosure.

FIG. 2 is a functional block diagram illustrating the system of FIG. 1 for dynamic weighted metrics-based evaluation and tokenization of Large Language Models (LLMs), according to some embodiments of the present disclosure.

FIG. 3A through 3C is an exemplary flow diagram illustrating a processor-implemented method for dynamic weighted metrics-based evaluation and tokenization of Large Language Models (LLMs), according to some embodiments of the present disclosure.

FIG. 4 is a block diagram illustrating validation of dynamic weighted metrics-based evaluation, according to some embodiments of the present disclosure.

FIG. 5 is a schematic diagram illustrating a task-matrices knowledge graph database, according to some embodiments of the present disclosure.

DETAILED DESCRIPTION

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

This discourse pertains broadly to the realm of machine learning and artificial intelligence (AI) driven model analytics. More precisely, it focuses on the prognostics and diagnosis of validation of LLM responses and models. LLM response validation involves assessing the quality, relevance, and ethical implications of generated text. Validation ensures that LLMs produce accurate, coherent, and unbiased responses that align with user expectations and ethical standards.

LLM model validation encompasses evaluating the overall performance, generalization capabilities, and adherence to ethical guidelines of the underlying models. Model validation helps identify weaknesses, biases, or vulnerabilities in LLMs and guides improvements to enhance their reliability, fairness, and trustworthiness.

Furthermore. to gain deeper insights into the strengths and limitations of an LLM before and after deploying the application for real-world scenarios, evaluations can offer valuable guidance for human LLMs interaction. With continuous growth of LLMs in size and capabilities, the existing evaluation procedures may prove insufficient in gauging their full potential and associated risks. Hence, a standard, evolving, and adaptive approach is required.

Existing approaches for LLM evaluation and LLM response evaluation can be broadly categorized into automatic evaluation metrics, human evaluation, and adversarial testing. An automatic evaluation metrics assess the quality of LLM responses automatically using predefined algorithms and criteria. They typically focus on metrics such as fluency, coherence, and relevance. Automatic metrics may not capture the semantic accuracy or relevance of LLM responses accurately, leading to limitations in assessing response quality. Metrics like Bilingual Evaluation Understudy (BLEU) and Recall-Oriented Understudy for Gisting Evaluation (ROUGE) may not account for contextual nuances, making them less effective for evaluating responses in contextually rich environments. Automatic metrics may not align with human judgments and preferences, as they are based on predefined algorithms and criteria.

Human evaluation involves soliciting judgments and feedback from human annotators or experts to assess the quality of LLM responses. It often includes criteria such as relevance, coherence, informativeness, and fluency. Human evaluation can be resource-intensive, requiring significant time, effort, and expense to gather annotations or expert judgments for a large number of responses. Human judgments may vary among annotators or experts due to subjective interpretations, biases, or individual preferences, leading to inconsistency and unreliability in evaluation results. Human evaluation may be challenging to scale to large datasets or real-time evaluation scenarios, limiting its applicability in practical settings.

Adversarial testing involves crafting inputs that expose weaknesses or vulnerabilities in LLMs, such as generating adversarial examples that trigger unintended behavior or bias. It aims to assess the robustness and reliability of LLM responses under various adversarial conditions. Adversarial testing may not cover the full range of potential vulnerabilities or failure modes of LLMs, as crafting effective adversarial examples requires specific expertise and knowledge of model weaknesses. Adversarial testing may raise ethical concerns, particularly if it involves generating harmful or misleading content that could be propagated by LLMs. Moreover, challenges with existing LLM evaluation methods include data contamination, over-reliance on perplexity, subjectivity and high cost of human evaluation, and biases on automated evaluation. In addition to these issues, enterprise generative artificial intelligence (GenAI) models may struggle with legal and ethical issues, which may affect LLMs.

Embodiments herein provide a method and system for dynamic weighted metrics-based evaluation and tokenization of Large Language Models (LLMs). The system is configured for dynamically weighted selection of performance metrics for generation of LLM response score. Further, the system is configured for generation of LLM maturity gap analysis and associated recommendation for improvement of LLM response score. The system is configured to generate a compliance certificate for every model (version) with a (threshold) level score and generate an Non-Fungible Token (NFT) using a smart contract based blockchain, using metadata associated with the model and the evaluation metrics and results.

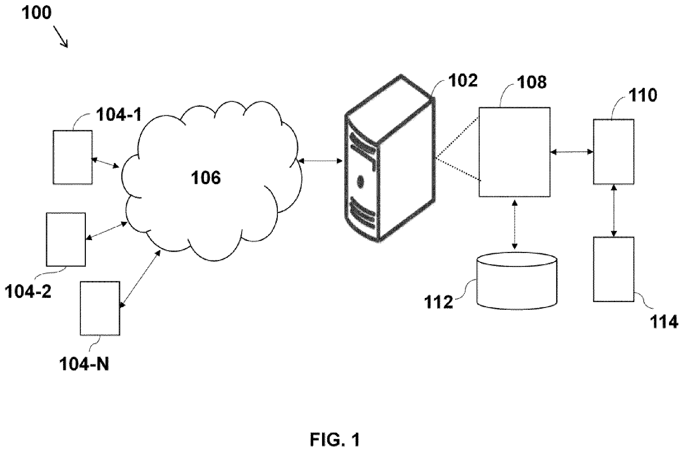

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1 illustrates a block diagram of a system 100 for a dynamic weighted metrics-based evaluation and tokenization of LLMs, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It may be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

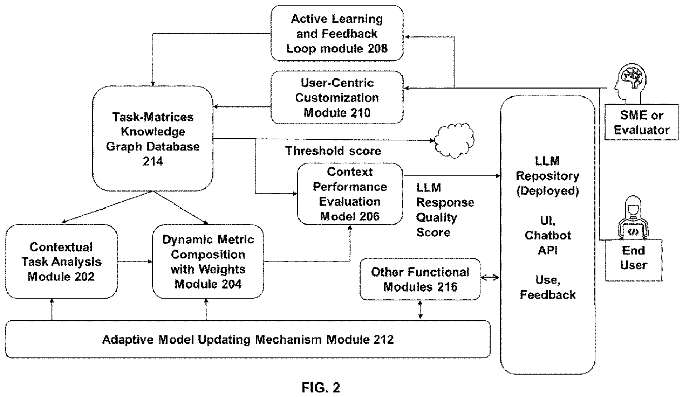

FIG. 2 is a functional block diagram 200 to illustrate the system 100 for the dynamic weighted metrics-based evaluation and tokenization of LLMs, according to some embodiments of the present disclosure. The plurality of modules 114 of the system 100 includes a contextual task analysis module 202, a dynamic metric composition with weights module 204, a context performance evaluation model 206, an active learning and feedback loop module 208, a user-centric customization module 210, an adaptive model updating mechanism module 212, a matrix knowledge database 214 and other functional modules 216.

The contextual task analysis module 202 of the system 100 is configured to analyze specific requirements and objectives of the task to identify relevant evaluation metrics. This step considers the task context, domain knowledge, and user expectations to determine which metrics are most pertinent for assessing response quality. Mathematically, *CCA* can be represented as a function $f_{CCA}$ that maps the task context *T* to a set of relevant evaluation metrics *M*. For example, in the context of plant disease identification:

$$f_{CCA}(T_{plant}) = \{accuracy,\ coverage,\ timeliness\} \qquad (1)$$

The dynamic metric composition with weights module 204 of the system 100 is configured to dynamically select evaluation metrics and assign weights based on their importance for the identified task context. This step leverages machine learning model or domain expertise or user feedback to determine the relative importance of each metric, ensuring that the evaluation criteria are tailored to the specific requirements of the task. Mathematically, dynamic metric composition with weights (DMCW) module 204 can be represented as a function $f_{DMCW}$ that dynamically selects metrics *M'* and assigns weights *W* based on the task context *T*.

$$f_{DMCW}(T_{plant}) = \{(accuracy, 0.6), (coverage, 0.3), (timeliness, 0.1)\} \qquad (2)$$

The context performance evaluation model (CPEM) 206 of the system 100 is configured to aggregate the weighted metric scores to estimate the overall response quality, generating an LLM response quality score. The context performance evaluation model 206 provides a quantitative assessment of response quality, considering the importance of each metric and providing a comprehensive evaluation of LLM-generated responses. Mathematically, CPEM can be represented as a function $f_{CPEM}$ that aggregates the weighted metric scores S to estimate the overall response quality *Q*.

$$f_{CPEM}(S_{plant}) = \sum_{i=1}^{n} w_i \times s_i \qquad (3)$$

where *n* is the number of metrics, $w_i$ is the weight assigned to metric *i*, and $s_i$ is the score of metric *i*.

The active learning and feedback loop module 208 of the system 100 is configured to collect feedback from users and domain experts iteratively to adapt metric selection and weights over time. This iterative process ensures that the evaluation criteria remain accurate and relevant, even as task requirements evolve. Mathematically, the active learning and feedback loop module 208 involves updating the metric selection and weights based on feedback received. For example, if users consistently prioritize coverage over accuracy for disease identification, AMSA may adjust the weights accordingly in future evaluations to better align with user preferences.

The user-centric customization module 210 of the system 100 allows users to personalize metric weights based on their preferences and objectives. Users can adjust weights to emphasize specific aspects of response quality, providing a tailored evaluation experience. Mathematically, the user-centric customization module 210 enables users to customize the weights assigned to each metric based on their preferences. For example, users may adjust weights to prioritize accuracy over coverage if they are more concerned about the precision of disease identification rather than the breadth of coverage.

The adaptive model updating mechanism module 212 of the system 100 continuously updates the system 100 based on new data and feedback, ensuring that the evaluation system remains adaptive and effective over time. This mechanism incorporates changes in metric weights and task requirements to improve evaluation accuracy and relevance. Mathematically, adaptive model updating mechanism module 212 involves updating the evaluation model parameters based on new data and feedback received. For example, if new diseases emerge or user priorities shift, adaptive model updating mechanism module 212 adjusts the evaluation criteria and weights accordingly to maintain the accuracy and effectiveness of the evaluation system.

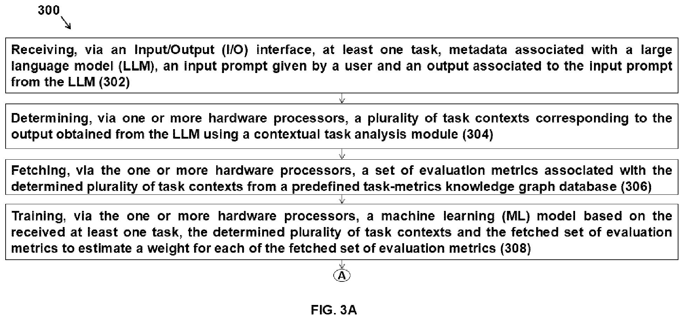

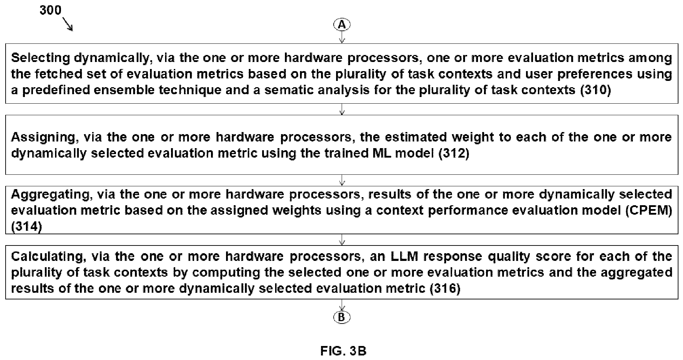

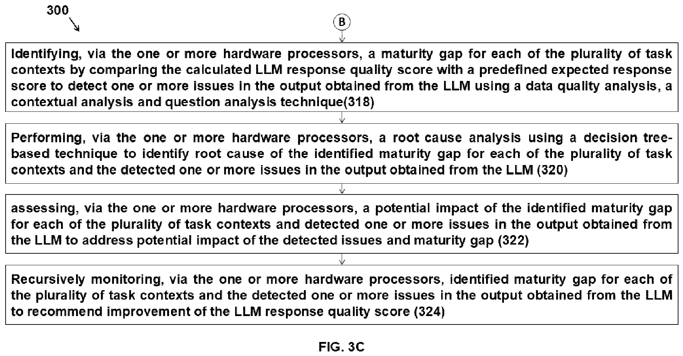

FIG. 3A through 3C (collectively referred as FIG. 3) is a flow diagram illustrating a processor-implemented method 300 for a dynamic weighted metrics-based evaluation and tokenization of LLMs implemented by the system 100 of FIG. 1, in accordance with an embodiment of the present disclosure. Functions of the components of the system 100 are now explained through steps of flow diagram in FIG. 3, according to some embodiments of the present disclosure.

Initially, at step 302 of the processor-implemented method 300, the one or more hardware processors 108 are configured by the programmed instructions to receive, via an Input/Output (I/O) interface, at least one task, metadata associated with a large language model (LLM), an input prompt given by a user, one or more user preferences obtained from the received input prompt, and an output associated to the input prompt from the LLM.

At the next step 304 of the processor-implemented method 300, the one or more hardware processors 108 are configured by the programmed instructions to determine a plurality of task contexts corresponding to the output obtained from the LLM using the contextual task analysis module 202 of the system 100. The plurality of task contexts is determined based on information available in the at least one task and a predefined domain knowledge base. The plurality of task contexts is determined using the various approaches such as topic modeling, contextual embedding models such as Bidirectional Encoder Representations from Transformers (BERT) or attention-based keyword analysis using the information available in the at least one task and the predefined domain knowledge base. The domain knowledge base is dynamically updated over time. For example, it involves analyzing the specific requirements and objectives of the task at hand, such as plant disease identification, and determining which evaluation metrics are most pertinent. In the context of disease identification, metrics like accuracy, coverage, and timeliness are identified as crucial for assessing response quality.

At the next step 306 of the processor-implemented method 300, the one or more hardware processors 108 are configured by the programmed instructions to fetch a set of evaluation metrics associated with the determined plurality of task contexts from a predefined task-metrics knowledge graph database. The dynamic metric composition with weights module 204 of the system 100 dynamically selects evaluation metrics and assigns weights based on their importance for the identified task context. This process leverages domain expertise or user feedback to determine the relative importance of each metric. For example, accuracy may be assigned a higher weight than coverage if precision is deemed critical in disease identification.

At the next step 308 of the processor-implemented method 300, the one or more hardware processors 108 are configured by the programmed instructions to train a machine learning (ML) model based on the received at least one task, the determined plurality of task contexts and the fetched set of evaluation metrics to estimate a weight for each of the fetched set of evaluation metrics. Information available in the at least one task, each of the plurality of task contexts and each of the set of evaluation metrics is converted to a feature vector. Moreover, domain expertise may be used to assign the weights to those metrics and would be used as a label for training the ML model.

It would be appreciated that the dynamic metric composition with weights module 204 of the system 100 ensures that the evaluation metrics are tailored to the specific requirements of the task, providing a nuanced and contextually relevant assessment of LLM response quality. The culmination of this process is the generation of an LLM response quality score, which reflects the aggregated assessment of response quality based on the selected metrics and their respective weights.

At the next step 310 of the processor-implemented method 300, the one or more hardware processors 108 are configured by the programmed instructions to dynamically select one or more evaluation metrics among the fetched set of evaluation metrics based on the plurality of task contexts and one or more user preferences obtained from the received input prompt using a predefined ensemble technique and a sematic analysis for the plurality of task contexts.

At the next step 312 of the processor-implemented method 300, the one or more hardware processors 108 are configured by the programmed instructions to assign the estimated weight to each of the one or more dynamically selected evaluation metric using the trained ML model.

At the next step 314 of the processor-implemented method 300, the one or more hardware processors 108 are configured by the programmed instructions to aggregate results of the one or more dynamically selected evaluation metric based on the assigned weights using a context performance evaluation model (CPEM).

After selecting and weighing the evaluation metrics, the CPEM aggregates the weighted metric scores to estimate the overall response quality. The CPEM considers the importance of each metric, providing a quantitative assessment that reflects the varying degrees of importance assigned to different aspects of response quality. For instance, if accuracy is prioritized over coverage in disease identification, the CPEM may give more weight to accuracy scores when aggregating the metric scores. The result is a comprehensive evaluation of LLM response quality that considers the specific requirements and objectives of the task.

Additionally, the active learning and feedback loop module 208 of the system 100 collects feedback from users and domain experts to adapt metric selection and weights over time, further refining the accuracy and relevance of the LLM response quality score. Furthermore, user-centric customization module 210 of the system 100 allows users to personalize metric weights based on their preferences and objectives, providing a tailored evaluation experience. Finally, the adaptive model updating mechanism (AMUM) module 212 of the system 100 continuously updates the system 100 based on new data and feedback, ensuring that the LLM response quality score remains adaptive and effective in assessing LLM response quality.

At the next step 316 of the processor-implemented method 300, the one or more hardware processors 108 are configured by the programmed instructions to calculate an LLM response quality score for each of the plurality of task contexts by computing the selected one or more evaluation metrics and the aggregated results of the one or more dynamically selected evaluation metric.

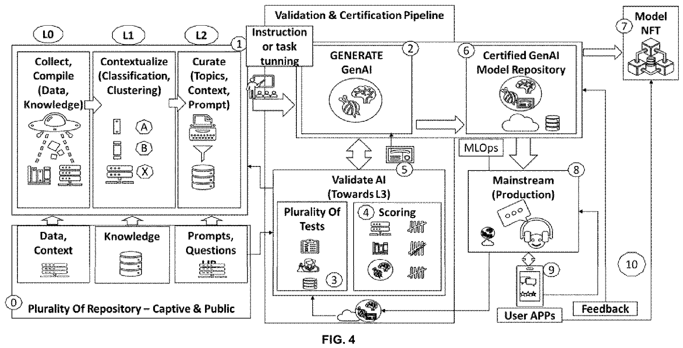

At the next step 318 of the processor-implemented method 300, the one or more hardware processors 108 are configured by the programmed instructions to identify a maturity gap for each of the plurality of task contexts by comparing the calculated LLM response quality score with a predefined expected response score to detect one or more issues in the output obtained from the LLM using a data quality analysis, a contextual analysis and question analysis technique to unveil underlying factors influencing LLM response quality. The data quality analysis scrutinizes the training data for biases, inconsistencies, and insufficient coverage of relevant topics as shown in FIG. 4. Mathematically, this can be represented as:

$f_{DQA}$ (D) → Q, where *DOA* is data quality analysis, *D* represents the model training data and *Q* represents the quality assessment score.

The contextual analysis assesses the contextual information provided with each task to identify any mismatches or inconsistencies between the task context and the LLM's training data.

$F_{CA}$ (C, D) → I, where *CA* represents contextual analysis, *C* represents the contextual information, *D* represents the model training data, and *I* represents the issue detection score.

The question analysis delves into the structure, the structure and content of the questions posed to the LLM to identify any ambiguities, biases, or misconceptions.

$f_{QA}$ (Q) → I, where *QA* represents question analysis, *Q* represents the questions posed to the LLM and *I* represents the issue detection score.

Following this, model maturity gap analysis is conducted by comparing current LLM response scores to expected scores, revealing disparities, and enabling deeper insights into detected issues through root cause analysis and impact assessment.

$f_{CSA}$ (S, W) → R, where *CSA* represents current state assessment, *S* represents the weighted metric scores, *W* represents the weights assigned to each metric, and *R* represents the LLM response score.

In one example, consider two metrices $(m_1, m_2)$ associated with a given task for testing the LLM. Scores of each metric, for example $m_1$=Relevance (*r*) are divided into a range of 1 to 3, where 1 is bad and 3 is good score. A value of 1 means the extent to which the model's generated responses are not pertinent and not directly related to the given prompt questions and lacks the key points of the context. High relevance scores signify the AI system's understanding of the input and its capability to produce coherent and contextually appropriate outputs. Conversely, low relevance scores indicate that generated responses might be off topic, lacking in context, or insufficient in addressing the user's intended queries.

Similarity, another metric, for example $m_2$= Coherence (*c*) is divided into a range of 1 to 3, where 1 is bad and 3 is good. It measures how well the language model can produce output that flows smoothly, reads naturally, and resembles human-like language. High value means that the LLM can generate text that reads naturally, flows smoothly, and resembles human-like language in its responses.

In another example, for a given task or topic such as "*weather-based disease potential and management instruction generation*", value of relevance (*r*) and coherence (*c*), both should be high (=3) for a low-literate farmer. The current LLM response score for the above task is based on the evaluation metrics (*r*, and *c*) and weights =1, it generates a score of (*r*=high=3, *c*=low=1). Then it is considering a low-performing model ($L_2$) for the given task and emphasis should be on improving the value of the coherence to increase to (*c*=high=3). This may take the LLM maturity to the highest level of $L_2$.

At the next step 320 of the processor-implemented method 300, the one or more hardware processors 108 are configured by the programmed instructions to perform a root cause analysis using a decision tree-based technique to identify root cause of the identified maturity gap for each of the plurality of task contexts and the detected one or more issues in the output obtained from the LLM.

At the next step 322 of the processor-implemented method 300, the one or more hardware processors 108 are configured by the programmed instructions to assess a potential impact of the identified maturity gap for each of the plurality of task contexts and detected one or more issues in the output obtained from the LLM to address potential impact of the detected issues and maturity gap.

Drawing insights from root cause analysis and impact assessment, optimization strategies are formulated to address issues and close maturity gaps, fostering enhanced LLM performance. These strategies encompass data enhancement, contextual improvements, and model fine-tuning to ensure a comprehensive approach to improvement. Additionally, a continuous monitoring and feedback loop is established to track the progress of optimization efforts and iteratively refine strategies based on feedback and performance data. This iterative refinement process facilitates ongoing improvement in LLM response scores and overall performance.

Finally, at the last step 324 of the processor-implemented method 300, the one or more hardware processors 108 are configured by the programmed instructions to recursively monitoring, via the one or more hardware processors, identified maturity gap for each of the plurality of task contexts and the detected one or more issues in the output obtained from the LLM to recommend improvement of the LLM response quality score.

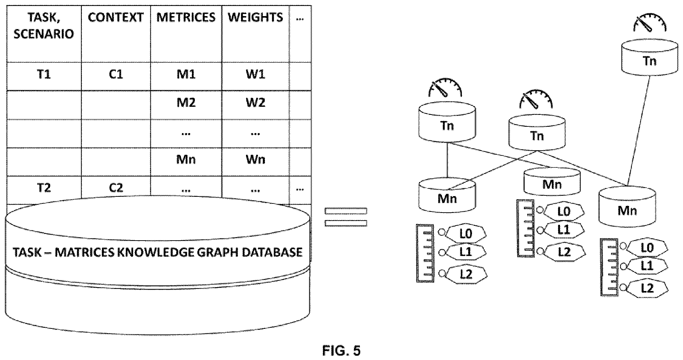

FIG. 5, a schematic diagram 500, is a task-metrics knowledge graph database 214 containing plurality of task scenarios, task contexts, set of evaluation metrics, associated weights, and other parameters of importance. Right side view is another form of representation of the same, highlighting how one combination of tasks and metrices may lead to a maturity level.

Further, the processor-implemented method includes generating a compliance certificate for every model (version) with a desired (threshold) level score and generating an NFT using a smart-contract based blockchain using metadata associated with the model and the evaluation metrics and results. The method begins with the collection of metadata associated with LLM models, including version information, training data sources, evaluation criteria, and performance metrics. This metadata serves as the foundation for evaluating model compliance and generating compliance certificates. Upon collection, a desired threshold level score is defined based on predefined standards or user requirements. Next, the LLM models are evaluated against this threshold using the collected metadata and performance metrics. If a model meets or exceeds the threshold, a compliance certificate is generated, indicating its compliance with the specified standards or requirements.

In parallel, smart contracts are developed on a blockchain platform to facilitate the generation and management of non-fungible tokens (NFTs). These smart contracts automate the process of creating, verifying, and transferring NFTs based on predefined conditions. The collected metadata associated with the certified LLM models, and their compliance certificates are integrated into the smart contracts to ensure that the NFTs generated are linked directly to the specific model version and its evaluation results. Utilizing the smart contracts, NFTs representing the compliance certificates for the certified LLM models are created and issued. Each NFT contains unique metadata, providing a secure and tamper-proof record of the model's certification status. Through blockchain verification mechanisms, stakeholders can verify the authenticity and validity of the compliance certificates associated with LLM models, enhancing transparency and trust in the deployment and usage of these models.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of evaluation of Large Language Models (LLMs) response quality and overall LLM models. Existing approaches for LLM evaluation and LLM response evaluation can be broadly categorized into automatic evaluation metrics, human evaluation, and adversarial testing. Embodiments herein provides a method and system for dynamically weighted selection of performance metrics for generation of LLM response score. Further, the system is configured for generation of LLM maturity gap analysis and associated recommendation for improvement of LLM response score. And finally, the system generates a compliance certificate for every model (version) with a (threshold) level score and generates an NFT using a smart contract based blockchain, using metadata associated with the model and the evaluation metrics and results.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development may change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) may be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300) comprising:

   receiving (302), via an Input/Output (I/O) interface, at least one task, metadata associated with a large language model (LLM), an input prompt given by a user and an output associated to the input prompt from the LLM;
   determining (304), via one or more hardware processors, a plurality of task contexts corresponding to the output obtained from the LLM using a contextual task analysis module, wherein the plurality of task contexts is determined based on information available in the at least one task and a predefined domain knowledge base;
   fetching (306), via the one or more hardware processors, a set of evaluation metrics associated with the determined plurality of task contexts from a predefined task-metrics knowledge graph database;
   training (308), via the one or more hardware processors, a machine learning (ML) model based on the received at least one task, the determined plurality of task contexts and the fetched set of evaluation metrics to estimate a weight for each of the fetched set of evaluation metrics;
   selecting (310) dynamically, via the one or more hardware processors, one or more evaluation metrics among the fetched set of evaluation metrics based on the plurality of task contexts and one or more user preferences obtained from the received input prompt using a predefined ensemble technique and a sematic analysis for the plurality of task contexts;
   assigning (312), via the one or more hardware processors, the estimated weight to each of the one or more dynamically selected evaluation metric using the trained ML model;
   aggregating (314), via the one or more hardware processors, results of the one or more dynamically selected evaluation metric based on the assigned weights using a context performance evaluation model (CPEM);
   calculating (316), via the one or more hardware processors, an LLM response quality score for each of the plurality of task contexts by computing the selected one or more evaluation metrics and the aggregated results of the one or more dynamically selected evaluation metric;
   identifying (318), via the one or more hardware processors, a maturity gap for each of the plurality of task contexts by comparing the calculated LLM response quality score with a predefined expected response score to detect one or more issues in the output obtained from the LLM using a data quality analysis, a contextual analysis and question analysis technique;
   performing (320), via the one or more hardware processors, a root cause analysis using a decision tree-based technique to identify root cause of the identified maturity gap for each of the plurality of task contexts and the detected one or more issues in the output obtained from the LLM;
   assessing (322), via the one or more hardware processors, a potential impact of the identified maturity gap for each of the plurality of task contexts and detected one or more issues in the output obtained from the LLM to address potential impact of the detected issues and maturity gap; and
   monitoring (324) recursively, via the one or more hardware processors, the identified maturity gap for each of the plurality of task contexts and the detected one or more issues in the output obtained from the LLM to recommend improvement of the LLM response quality score.

2. The processor-implemented method (300) as claimed in claim 1, wherein a rule-based technique is used to carry out a root cause analysis to detect root cause of the identified maturity gap for each of the plurality of task contexts and the detected one or more issues in the output obtained from the LLM.

3. The processor-implemented method (300) as claimed in claim 1, wherein a compliance certificate is generated based on a predefined threshold LLM response quality score.

4. The processor-implemented method (300) as claimed in claim 1, wherein a non-fungible token (NFT) is generated to represent the generated compliance certificate and to integrate the generated compliance certificate into a smart contract.

**5.** The processor-implemented method (300) as claimed in claim 1, wherein a rule-based technique considers the at least one task, the plurality of task contexts and the LLM response quality score associated with each of the determined evaluation metrices to detect one or more issues.

**6.** A system (100) comprising:

an input/output interface (104) to receive at least one task, metadata associated with a large language model (LLM), an input prompt given by a user and an output associated to the input prompt from the LLM;
one or more hardware processors (108);
a memory (110) in communication with the one or more hardware processors (108), wherein the one or more hardware processors (108) are configured to execute programmed instructions stored in the memory (110) to:

determine a plurality of task contexts corresponding to the output obtained from the LLM using a contextual task analysis module, wherein the plurality of task contexts is determined based on information available in the at least one task and a predefined domain knowledge base;
fetch a set of evaluation metrics associated with the determined plurality of task contexts from a predefined task-metrics knowledge graph database;
train a machine learning (ML) model based on the received at least one task, the determined plurality of task contexts and the fetched set of evaluation metrics to estimate a weight for each of the fetched set of evaluation metrics;
select dynamically one or more evaluation metrics among the fetched set of evaluation metrics based on the plurality of task contexts and one or more user preferences obtained from the received input prompt using a predefined ensemble technique and a sematic analysis for the plurality of task contexts;
assign the estimated weight to each of the one or more dynamically selected evaluation metric using the trained ML model;
aggregate results of the one or more dynamically selected evaluation metric based on the assigned weights using a context performance evaluation model (CPEM);
calculate an LLM response quality score for each of the plurality of task contexts by computing the selected one or more evaluation metrics and the aggregated results of the one or more dynamically selected evaluation metric;
identify a maturity gap for each of the plurality of task contexts by comparing the calculated LLM response quality score with a predefined expected response score to detect one or more issues in the output obtained from the LLM using a data quality analysis, a contextual analysis and question analysis technique;
perform a root cause analysis using a decision tree-based technique to identify root cause of the identified maturity gap for each of the plurality of task contexts and the detected one or more issues in the output obtained from the LLM;
assess a potential impact of the identified maturity gap for each of the plurality of task contexts and detected one or more issues in the output obtained from the LLM to address potential impact of the detected issues and maturity gap; and
monitor recursively the identified maturity gap for each of the plurality of task contexts and the detected one or more issues in the output obtained from the LLM to recommend improvement of the LLM response quality score.

**7.** The system (100) as claimed in claim 6, wherein a rule-based technique is used to carry out a root cause analysis to detect root cause of the identified maturity gap for each of the plurality of task contexts and the detected one or more issues in the output obtained from the LLM.

**8.** The system (100) as claimed in claim 6, wherein a compliance certificate is generated based on a predefined threshold LLM response quality score.

**9.** The system (100) as claimed in claim 6, wherein a non-fungible token (NFT) is generated to represent the generated compliance certificate and to integrate the generated compliance certificate into a smart contract.

**10.** The system (100) as claimed in claim 6, wherein a rule-based technique considers the at least one task, the plurality of task contexts and the LLM response quality score associated with each of the determined evaluation metrices to detect one or more issues.

**11.** One or more non-transitory machine-readable information storage mediums comprising one or more instructions

which when executed by one or more hardware processors cause:

receiving, via an Input/Output (I/O) interface, at least one task, metadata associated with a large language model (LLM), an input prompt given by a user and an output associated to the input prompt from the LLM;

determining a plurality of task contexts corresponding to the output obtained from the LLM using a contextual task analysis module, wherein the plurality of task contexts is determined based on information available in the at least one task and a predefined domain knowledge base;

fetching a set of evaluation metrics associated with the determined plurality of task contexts from a predefined task-metrics knowledge graph database;

training a machine learning (ML) model based on the received at least one task, the determined plurality of task contexts and the fetched set of evaluation metrics to estimate a weight for each of the fetched set of evaluation metrics;

selecting dynamically, one or more evaluation metrics among the fetched set of evaluation metrics based on the plurality of task contexts and one or more user preferences obtained from the received input prompt using a predefined ensemble technique and a sematic analysis for the plurality of task contexts;

assigning the estimated weight to each of the one or more dynamically selected evaluation metric using the trained ML model;

aggregating, results of the one or more dynamically selected evaluation metric based on the assigned weights using a context performance evaluation model (CPEM);

calculating, an LLM response quality score for each of the plurality of task contexts by computing the selected one or more evaluation metrics and the aggregated results of the one or more dynamically selected evaluation metric;

identifying a maturity gap for each of the plurality of task contexts by comparing the calculated LLM response quality score with a predefined expected response score to detect one or more issues in the output obtained from the LLM using a data quality analysis, a contextual analysis and question analysis technique;

performing a root cause analysis using a decision tree-based technique to identify root cause of the identified maturity gap for each of the plurality of task contexts and the detected one or more issues in the output obtained from the LLM;

assessing a potential impact of the identified maturity gap for each of the plurality of task contexts and detected one or more issues in the output obtained from the LLM to address potential impact of the detected issues and maturity gap; and

monitoring recursively, the identified maturity gap for each of the plurality of task contexts and the detected one or more issues in the output obtained from the LLM to recommend improvement of the LLM response quality score.

12. The one or more non-transitory machine-readable information storage mediums as claimed in claim 11, wherein a rule-based technique is used to carry out a root cause analysis to detect root cause of the identified maturity gap for each of the plurality of task contexts and the detected one or more issues in the output obtained from the LLM.

13. The one or more non-transitory machine-readable information storage mediums as claimed in claim 11, wherein a compliance certificate is generated based on a predefined threshold LLM response quality score.

14. The one or more non-transitory machine-readable information storage mediums as claimed in claim 11, wherein a non-fungible token (NFT) is generated to represent the generated compliance certificate and to integrate the generated compliance certificate into a smart contract.

15. The one or more non-transitory machine-readable information storage mediums as claimed in claim 11, wherein a rule-based technique considers the at least one task, the plurality of task contexts and the LLM response quality score associated with each of the determined evaluation metrices to detect one or more issues.

100

104-1

104-2

104-N

106

102

108

110

112

114

FIG. 1

FIG. 2

300

Receiving, via an Input/Output (I/O) interface, at least one task, metadata associated with a large language model (LLM), an input prompt given by a user and an output associated to the input prompt from the LLM (302)

Determining, via one or more hardware processors, a plurality of task contexts corresponding to the output obtained from the LLM using a contextual task analysis module (304)

Fetching, via the one or more hardware processors, a set of evaluation metrics associated with the determined plurality of task contexts from a predefined task-metrics knowledge graph database (306)

Training, via the one or more hardware processors, a machine learning (ML) model based on the received at least one task, the determined plurality of task contexts and the fetched set of evaluation metrics to estimate a weight for each of the fetched set of evaluation metrics (308)

Ⓐ

FIG. 3A

300

Ⓐ

Selecting dynamically, via the one or more hardware processors, one or more evaluation metrics among the fetched set of evaluation metrics based on the plurality of task contexts and user preferences using a predefined ensemble technique and a sematic analysis for the plurality of task contexts (310)

Assigning, via the one or more hardware processors, the estimated weight to each of the one or more dynamically selected evaluation metric using the trained ML model (312)

Aggregating, via the one or more hardware processors, results of the one or more dynamically selected evaluation metric based on the assigned weights using a context performance evaluation model (CPEM) (314)

Calculating, via the one or more hardware processors, an LLM response quality score for each of the plurality of task contexts by computing the selected one or more evaluation metrics and the aggregated results of the one or more dynamically selected evaluation metric (316)

Ⓑ

FIG. 3B

300

(B)

Identifying, via the one or more hardware processors, a maturity gap for each of the plurality of task contexts by comparing the calculated LLM response quality score with a predefined expected response score to detect one or more issues in the output obtained from the LLM using a data quality analysis, a contextual analysis and question analysis technique(318)

Performing, via the one or more hardware processors, a root cause analysis using a decision tree-based technique to identify root cause of the identified maturity gap for each of the plurality of task contexts and the detected one or more issues in the output obtained from the LLM (320)

assessing, via the one or more hardware processors, a potential impact of the identified maturity gap for each of the plurality of task contexts and detected one or more issues in the output obtained from the LLM to address potential impact of the detected issues and maturity gap (322)

Recursively monitoring, via the one or more hardware processors, identified maturity gap for each of the plurality of task contexts and the detected one or more issues in the output obtained from the LLM to recommend improvement of the LLM response quality score (324)

FIG. 3C

FIG. 4

| TASK, SCENARIO | CONTEXT | METRICES | WEIGHTS | ... |
|---|---|---|---|---|
| T1 | C1 | M1 | W1 | |
| | | M2 | W2 | |
| | | ... | ... | |
| | | Mn | Wn | |
| T2 | C2 | ... | ... | ... |

TASK – MATRICES KNOWLEDGE GRAPH DATABASE

**FIG. 5**

# EUROPEAN SEARCH REPORT

**Application Number**

EP 25 18 2588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lin Yen-Ting ET AL: "LLM-Eval: Unified Multi-Dimensional Automatic Evaluation for Open-Domain Conversations with Large Language Models", , 23 May 2023 (2023-05-23), pages 1-12, XP093332745, Retrieved from the Internet: URL:https://arxiv.org/abs/2305.13711 * abstract; figure 1 * * page 4, right-hand column, paragraph 5 * | 1-15 | INV. G06F16/334 G06F40/30 |
| A | MOUHAMED AMINE BOUCHIHA ET AL: "LLMChain: Blockchain-based Reputation System for Sharing and Evaluating Large Language Models", ARXIV.ORG, CORNELL UNIVERSITY LIBRARY, 201 OLIN LIBRARY CORNELL UNIVERSITY ITHACA, NY 14853, 20 April 2024 (2024-04-20), XP091734246, * page 3, left-hand column, last paragraph - page 6, right-hand column, paragraph 2; figure 1 * | 1-15 | |

TECHNICAL FIELDS SEARCHED (IPC)

G06F

The present search report has been drawn up for all claims

| Place of search | Date of completion of the search | Examiner |
|---|---|---|
| Munich | 6 November 2025 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421046440